# EUROPEAN PATENT APPLICATION

(11) **EP 4 806 305 A1**
(43) Date of publication of application: **16.09.2026**
(21) Application number: 26155277.2
(22) Date of filing: 30.01.2026
(51) Int. Cl.: A47J 31/06, A47J 31/36, A47J 31/52

(54) **COFFEE MACHINE WITH FILTER HOLDER DETECTION SYSTEM**

(30) Priority: 14.03.2025 IT 202500005254
(71) Applicant: SIMONELLI GROUP S.P.A., 62020 Belforte del Chienti (MC) (IT)
(72) Inventor: CINGOLANI, Claudio Enrico, 62032 CAMERINO (MC) (IT); FELIZIANI, Marco, 62029 TOLENTINO (MC) (IT); PARRINI, Mauro, 63821 PORTO SANT'ELPIDIO (FM) (IT)
(74) Representative: Cutropia, Gianluigi

(57) **Abstract**

A coffee machine (100) comprises a remote detection system (4) suitable for detecting the presence of the filter holder (3) when the body (30) of the filter holder is coupled in the group head (20) of the dispensing unit; wherein the remote detection system (4) is disposed at a distance from the filter holder (3) and the remote detection system (4) is connected to a control unit of the coffee machine and is configured to send a presence control signal when the body (30) of the filter holder is inserted in the group head (20) of the dispensing, unit and an absence control signal when the filter holder is detached and moved away from the dispensing unit.

## Description

The present invention relates to a coffee machine with a filter holder detection system.

Coffee machines with filter holder detection systems configured to detect when the filter holder is inserted into the dispensing unit of the machine are known.

WO2018219883A1, in the name of the same applicant, discloses a filter holder detection system comprising a proximity sensor arranged in the dispensing unit to detect a tab of the filter holder when the filter holder is inserted into the dispensing unit.

EP3430952A1 (US10706288B2), in the name of the same applicant, discloses a coffee machine with self-cleaning system. In order to automate the self-cleaning system described in EP3430952A1, it is important to know when the filter holder is attached to the dispensing unit and when the filter holder is detached from the dispensing unit, so that the dispensing unit is automatically rinsed.

Currently, in order to detect the presence of the filter holder, a proximity sensor of inductive type is connected to an annular group head of the dispensing unit that detects the presence or absence of the body of the filter holder, as described in EP3430952A1 and in WO2018219883A1. However, such an inductive sensor is located in an area of the group had of the dispensing unit that is hot and dirty with coffee. Additionally, the reading distance of the inductive sensor is very low, and therefore a very precise adjustment of the distance between the sensor and the filter holder is necessary. Such a distance is difficult to adjust and standardize, partly because the tolerances involved require a unique adjustment for each dispensing unit. Therefore, the proximity sensor detects the presence of the filter holder only when the filter holder is in contact with the proximity sensor. For such a reason, the proximity sensor must be located in the group head of the dispensing unit. Such a type of proximity sensor is not a remote sensor, as it does not detect the filter holder when it is at a distance from the sensor.

The purpose of the present invention is to eliminate the drawbacks of the prior art by providing a coffee machine with a filter holder detection system that is capable of avoiding the installation of a sensor in the dispensing unit.

Another purpose is to provide such a coffee machine with a filter holder detection system that is precise and accurate, regardless of the distance between the detection system and the filter holder.

Another purpose is to provide such a coffee machine with a filter holder detection system that is versatile and suitable for being used for any type of filter holder and any type of dispensing unit.

These purposes are achieved in accordance with the invention with the characteristics of the attached independent claim 1.

Advantageous embodiments of the invention appear from the dependent claims.

The coffee machine with a filter holder detection system is defined in independent claim 1.

In order to overcome the drawback of the prior art, the invention comprises a remote detection system. The term "remote" means that the detection system detects the filter holder at a certain distance between the detection system and the filter holder.

Hereinafter, the terms "behind" and "in front" refer to an observer standing in front of the coffee machine.

In a first embodiment of the invention, the remote detection system comprises a magnetic sensor applied to a front wall of the coffee machine, behind the dispensing unit and at a distance from the dispensing unit. The magnetic sensor is configured to read the presence of the filter holder when the filter holder is inserted into the dispensing unit. In such a case, the filter holder has a toroidal magnet around the dispensing spout.

In a second embodiment of the invention, the remote detection system comprises a radar with a transceiver that emits radar waves and receives radar waves reflected by the filter holder. The radar is located on the front wall of the machine, behind the dispensing unit and at a distance from the dispensing unit.

Further features of the invention will become clearer from the following detailed description, which refers to purely illustrative and therefore non-limiting embodiments of the invention, illustrated in the accompanying drawings, wherein:
Fig. 1 is a perspective view schematically illustrating a first embodiment of coffee machine with filter holder detection system according to the invention;
Fig. 2 is an exploded axial sectional view of a filter holder of the coffee machine of Fig. 1; and
Fig. 3 is a perspective view schematically illustrating a second embodiment of coffee machine with filter holder detection system according to the invention.

With the aid of the Figures, the coffee machine with filter holder detection system according to the invention, which is generally indicated with reference numeral 100, is described.

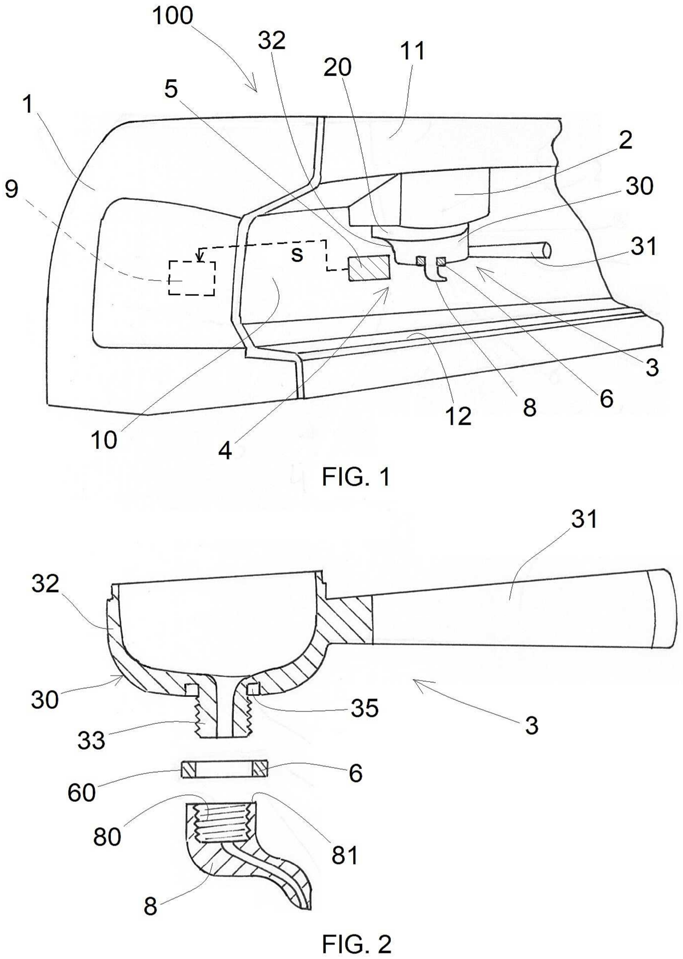

With reference to Fig. 1, the coffee machine (100) comprises a frame (1). The frame (1) comprises:
- a front wall (10),
- an upper wall (11) protruding anteriorly from the front wall (10), and
- a base (12) protruding anteriorly from the front wall (10).

A dispensing unit (2) protrudes inferiorly from the upper wall (11) toward the base (12), opposite the front wall (10).

The dispensing unit (2) has an annular group head (20) suitable for accommodating a filter holder (3). The group head (20) of the dispensing unit is spaced from the front wall (10) of the coffee machine. The dispensing unit (2) is suitable for dispensing pressurized hot water to extract the coffee contained in the filter holder (3).

As it is known, the coffee machine (100) comprises a hydraulic system equipped with a boiler and compressor to supply pressurized hot water to the dispensing unit (2).

The filter holder (3) comprises a body (30) suitable for containing ground coffee and for being inserted into the group head (20) of the dispensing unit. A handle (31) protrudes radially from the body (30) of the filter holder in order to be gripped by a user.

A dispensing spout (8) protrudes inferiorly from the body (30) of the filter holder to dispense liquid coffee into a cup that is positioned on the base (12) of the frame of the coffee machine.

The body (30) of the filter holder has a rear portion (32) suitable for facing the front wall (10) of the machine when the body (30) of the filter holder is placed in the group head (20) of the dispensing unit.

According to the invention, the coffee machine (100) comprises a remote detection system (4) suitable for detecting the presence of the filter holder (3) when the body (30) of the filter holder is inserted into the group head (20) of the dispensing unit. Otherwise said, the detection system (4) is configured to detect the filter holder (3) when the body (30) of the filter holder is inserted into the group head (20) of the dispensing unit and is located at a certain distance from the detection system (4). In particular, the detection system (4) is located outside the group head (20) of the dispensing unit at a certain distance from the rear portion (32) of the body of the filter holder that is arranged in the group head (20) of the dispensing unit.

Such a remote detection system (4) is operatively connected to a control unit (9) of the coffee machine to send a detection signal (S) indicating the presence or absence of the filter holder in the dispensing unit. The control unit (9) is configured to receive the detection signal (S) and understand when the body (30) of the filter holder is inserted in the group head (20) of the dispensing unit and when the filter holder is detached and moved away from the dispensing unit.

In a first embodiment of the invention, the remote detection system (4) comprises a magnetic sensor (5) suitable for remotely detecting a magnetic element (6) arranged in the body (30) of the filter holder.

The magnetic sensor (5) is arranged on the front wall (10) of the frame of the coffee machine, behind the group head (20) of the dispensing unit (2) and behind and at a distance from the rear portion (32) of the body (30) of the filter holder, when it is inserted into the group head (20) of the dispensing unit.

The magnetic sensor (5) is set to detect the magnetic element (6), with a magnetic flux with constant intensity, when the body (30) of the filter holder is inserted into the group head (20) of the dispensing unit, given that the magnetic element (6) in the body of the filter holder does not move with respect to the magnetic sensor. In such a case, the detection signal (S) indicates the presence of the filter holder in the dispensing unit.

Conversely, when the filter holder is detached and moved away from the dispensing unit, there is an intensity variation in the magnetic flux detected by the magnetic sensor (5), as the magnetic element (6) in the body of the filter holder is moved away from the magnetic sensor (5) and therefore the flux intensity varies and decreases. In such a case, the detection signal (S) indicates that the filter holder has been removed from the dispensing unit.

The magnetic sensor (5) is connected to the control unit (9) of the coffee machine. In such a way, by receiving the detection signal (S), the control unit (9) understands when the body (30) of the filter holder is inserted into the group head (20) of the dispensing unit and when the filter holder is detached and moved away from the dispensing unit.

In order to avoid any magnetic interference, at least a portion of the front wall (10) of the frame around the magnetic sensor (5) is made of non-magnetic material, such as non-magnetic steel. Similarly, the body (30) of the filter holder is made of non-magnetic material, such as non-magnetic steel.

Additionally, the magnetic sensor (5) may be installed in a plastic lid located in the front wall (10) of the frame behind the dispensing unit (2).

With reference to Fig. 2, the dispensing spout (8) may be a separate element from the body (30) of the filter holder. In such a case, the body (30) of the filter holder comprises a tang (33) that projects inferiorly in order to be inserted in a seat (80) of the dispensing spout. The tang (33) of the body of the filter holder has an external thread. The seat (80) of the dispensing spout has an internal thread that is screwed onto the external thread of the tang of the body of the filter holder.

The magnetic element (6) has a toroidal shape. The magnetic element (6) may be protected from dirt and moisture by a film (60) wrapped around the magnetic element (6). The film (60) may be made of food-grade plastic material and co-molded with the magnetic element (6).

An annular seat (35) is obtained in the form of a groove in the body (30) of the filter holder around the tang (33). The magnetic element (6) with toroidal shape is disposed in the annular seat (35) and successively the dispensing spout (8) is screwed onto the tang (33) of the body of the filter holder so that an upper edge (81) of the dispensing spout abuts against the magnetic element (6) to hold it in its annular seat (35).

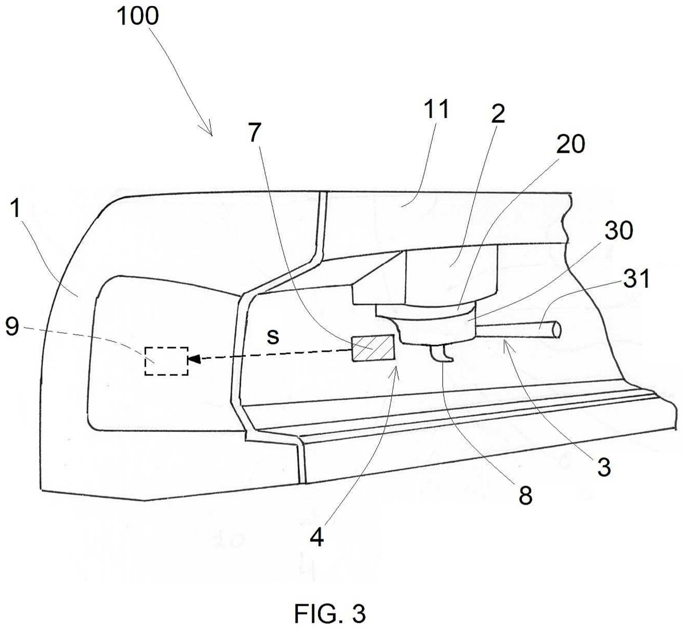

With reference to Fig. 3, a second embodiment of the coffee machine according to the invention is illustrated, wherein the remote detection system (4) comprises a radar (7) arranged on the front wall (10) of the frame of the coffee machine, behind and at a distance from the group head (20) of the dispensing unit (2), so as to be disposed behind and at a distance from the rear portion (32) of the body (30) of the filter holder when it is inserted into the group head (20) of the dispensing unit.

The radar (7) has a transceiver configured to emit radar waves toward the body (30) of the filter holder when the body (30) of the filter holder is inserted into the group head (20) of the dispensing unit and receive the radar waves reflected by the body (30) of the filter holder. In such a case, the radar (7) sends a detection signal (S) to the control unit (9) indicative of the time elapsed between a transmitted wave and a reflected wave and therefore of the distance between the radar (7) and the body (30) of the filter holder. Then the radar (7) sends a detection signal (S) to the control unit (9) indicative of the distance between the radar and the body of the filter holder.

When the body of the filter holder is inserted into the group head of the dispenser unit, the detection signal (S) will indicate a specific distance that is exactly the distance between the radar and the body of the filter holder inserted in the group head of the dispensing unit.

When the filter holder is detached and moved away from the dispensing unit, the detection signal (S) will indicate an increase in the distance, indicating that the filter holder has been detached and moved away from the dispensing unit.

In view of the above, by receiving the detection signal (S), the control unit (9) understands when the body (30) of the filter holder is inserted in the group head (20) of the dispensing unit or when the filter holder is detached and moved away from the dispensing unit.

The front wall (10) of the frame of the coffee machine has at least one plastic portion that houses the radar (7). In such a way, the front wall (10) of the frame of the coffee machine does not create any interference with the radar.

Numerous variations and detailed modifications can be made to the present embodiment of the invention, within the reach of a person skilled in the art, however falling within the scope of the invention as expressed by the appended claims.

## Claims

1. Coffee machine (100) comprising:
- a frame (1) having a front wall (10) and an upper wall (11) that projects anteriorly from the front wall (10),
- a dispensing unit (2) that projects inferiorly from the upper wall (11); said dispensing unit (2) having a group head (20) arranged in front of the front wall (10) of the frame,
- a filter holder (3) comprising a body (30) suitable for containing ground coffee and for being inserted into said group head (20) of the dispensing unit; wherein the dispensing unit (2) is suitable for dispensing pressurized hot water to extract the coffee contained in the filter holder (3),
- a detection system (4) suitable for detecting the presence of the filter holder (3) when the body (30) of the filter holder is inserted into the group head (20) of the dispensing unit and configured to emit a detection signal (S) indicative of when the body (30) of the filter holder is coupled into the group head (20) of the dispensing unit, and when the filter holder is detached and moved away from the dispensing unit; and
- a control unit (9) operatively connected to the detection system (4) and configured to receive said detection signal (S) and understand when the body (30) of the filter holder is inserted into the group head (20) of the dispensing unit and when the filter holder is detached and moved away from the dispensing unit;
**characterized in that**
said detection system (4) is of remote type and is suitable for detecting the presence of the filter holder (3) coupled to said group head (20) of the dispensing unit, when the filter holder (3) is distant from said detection system (4); and
said detection system (4) is positioned outside and at a distance from said group head (20) of the dispensing unit.

2. The coffee machine (100) according to claim 1, wherein said detection system (4) comprises a magnetic sensor (5) suitable for remotely detecting a magnetic element (6) arranged in the body (30) of the filter holder.

3. The coffee machine (100) according to claim 2, wherein said magnetic sensor (5) is arranged on the front wall (10) of the frame of the coffee machine behind said group head (20) of the dispensing unit (2), so that the magnetic sensor (5) is at a distance from the body (30) of the filter holder when it is inserted into the group head (20) of the dispensing unit.

4. The coffee machine (100) according to claim 2 or 3, wherein said magnetic sensor (5) is set to detect a magnetic flux with constant intensity of the magnetic element (6) when the body (30) of the filter holder is inserted into the group head (20) of the dispensing unit and detect a density variation in the magnetic flux of the magnetic element (6) when the filter holder is detached and moved away from the dispensing unit.

5. The coffee machine (100) according to claim 4, wherein said magnetic sensor (5) is connected to the control unit (9) of the coffee machine and is configured to send a detection signal (S) with constant intensity of the magnetic flux when the body (30) of the filter holder is inserted into the group head (20) of the dispensing unit, and a detection signal (S) with variable intensity of the magnetic flux when the filter holder is detached and moved away from the dispensing unit.

6. The coffee machine (100) according to any of claims 2 to 5, wherein at least a portion of said front wall (10) of the frame around the magnetic sensor (5) is made of non-magnetic material and the body (30) of the filter holder is made of non-magnetic material.

7. The coffee machine (100) according to any of claims 2 to 6, wherein said magnetic sensor (5) is installed in a plastic lid located in the front wall (10) of the frame behind the group head (20) of dispensing unit (2).

8. The coffee machine (100) according to any of claims 2 to 7, wherein said filter holder (3) comprises a dispensing spout (8) composed of an element that is separated from the body (30) of the filter holder, and the body (30) of the filter holder comprises a tang (33) that projects inferiorly in order to be inserted in a seat (80) of the dispensing spout; and the magnetic element (6) has a toroidal shape; and the body (30) of the filter holder comprises an annular seat (35) in the form of a groove obtained around the tang (33) to accommodate said magnetic element (6) with toroidal shape.

9. The coffee machine (100) according to any of claims 2 to 8, wherein said magnetic element (6) is protected by a film (60) wrapped around the magnetic element (6).

10. The coffee machine (100) according to claim 1, wherein said remote detection system (4) comprises a radar (7) arranged on the front wall (10) of the frame of the coffee machine, behind the group head (20) of the dispensing unit (2), so that the radar (7) is at a distance from the body (30) of the filter holder when it is inserted into the group head (20) of the dispensing unit; said radar (7) having a transceiver configured to emit radar waves towards the body (30) of the filter holder when the body (30) of the filter holder is inserted into the group head (20) of the dispensing unit, so that the body (30) of the filter holder reflects the radar waves and the radar (7) detects the radar waves reflected by the body (30) of the filter holder and, when the filter holder is detached and moved away from the dispensing unit, the radar waves reflected by the body of the filter holder indicate a variation in the distance of the filter holder from the radar (7).

11. The coffee machine (100) according to claim 10, wherein the front wall (10) of the frame of the coffee machine has at least one plastic portion that houses the radar (7), so that the front wall (10) of the frame of the coffee machine does not create any interference with the radar.
